# EUROPÄISCHE PATENTSCHRIFT

(11) **EP 4 047 325 B1**
(45) Veröffentlichungstag und Bekanntmachung des Hinweises auf die Patenterteilung: **22.05.2024**
(21) Anmeldenummer: 22153115.5
(22) Anmeldetag: 25.01.2022
(51) Int. Cl.: G01D 5/347

(54) **WINKELMESSSYSTEM**
ANGLE MEASURING SYSTEM
SYSTÈME DE MESURE D'ANGLE

(30) Priorität: 23.02.2021 DE 102021201679
(43) Veröffentlichungstag der Anmeldung: 24.08.2022
(73) Patentinhaber: Dr. Johannes Heidenhain GmbH, 83301 Traunreut (DE)
(72) Erfinder: Schopf, Reinhold, 83308 Trostberg (DE); Mitterreiter, Johann, 83339 Chieming (DE); Martin, Michael, 83339 Chieming (DE); Ruech, Friedrich, 83346 Bergen (DE)

(56) Entgegenhaltungen:
- EP-A1- 1 612 633
- EP-A1- 3 179 217
- DE-A1-102007 042 659

## Beschreibung

### GEBIET DER TECHNIK

Die Erfindung betrifft ein Winkelmesssystem umfassend ein Winkelmessgerät und einen Drehübertrager zur kontaktlosen Übertragung von elektrischen Signalen und / oder elektrischer Leistung gemäß dem Anspruch 1.

Winkelmessgeräte werden beispielsweise als Winkelmesseinrichtungen zur Bestimmung der Winkelposition zweier relativ zueinander drehbarer Maschinenteile verwendet. Die Winkelstellung wird dabei inkremental oder absolut erfasst. Zum Beispiel werden derartige Winkelmesseinrichtungen oder Messanordnungen häufig in Verbindung mit Rundtischen in Bearbeitungszentren verwendet zur exakten Bestimmung der Winkelstellung des Rundtisches. Ferner werden Rundtische in Messmaschinen verwendet, wobei in dieser Anwendung ein auf dem Rundtisch befestigtes Werkstück vermessen wird. Winkelmessgeräte werden insbesondere bei Werkzeugmaschinen beziehungsweise Messmaschinen für die Messung von rotatorischen Bewegungen eingesetzt.

Zudem ist es häufig erforderlich bei entsprechenden Maschinen elektrische Energie oder elektrische Signale von einem stehendem Maschinenteil auf ein drehbares Maschinenteil zu übertragen.

Zu diesem Zweck werden Schleifringe oder kontaktlose Drehübertrager beziehungsweise Koppler innerhalb der Konstruktion der betreffenden Maschine verwendet.

### STAND DER TECHNIK

In der EP 3 179 217 A1 wird ein Winkelmesssystem beschrieben, bei dem ein Drehübertrager eine optische Markierung aufweist, die relativ zu einer Fotodiodenzelle als Sensor drehbar angeordnet ist.

### ZUSAMMENFASSUNG DER ERFINDUNG

Der Erfindung liegt die Aufgabe zugrunde ein Winkelmesssystem zu schaffen, durch das eine Winkelmessung und eine drahtlose Übertragung von elektrischen Signalen und / oder elektrischer Leistung möglich ist, wobei durch die Erfindung eine kompakte und wirtschaftlich herstellbare modulare Bauweise des Winkelmesssystems erreichbar ist.

Diese Aufgabe wird erfindungsgemäß durch die Merkmale des Anspruches 1 gelöst.

Das erfindungsgemäße Winkelmesssystem umfasst ein Winkelmessgerät und einen Drehübertrager zur kontaktlosen beziehungsweise drahtlosen Übertragung von elektrischen Signalen und / oder elektrischer Leistung. Das entsprechende Winkelmessgerät umfasst seinerseits eine Welle und ein Gehäuse. Dabei ist die Welle relativ zum Gehäuse um eine Achse drehbar angeordnet. Das Gehäuse umschließt die Welle radial, so dass also das Gehäuse eine Wandung aufweist, die sich mit radialem Abstand in Umfangsrichtung um die Welle herum erstreckt. Ferner weist das Gehäuse Ausnehmungen, insbesondere Bohrungen, auf. Der Drehübertrager weist ein Primärteil auf, das eine Primärwicklung aufweist insbesondere zur Übertragung elektrischer Leistung. Zudem weist der Drehübertrager Befestigungseinrichtungen auf, die nach einem geometrischen Muster angeordnet sind. Dieses Muster ist so gestaltet, dass ein deckungsgleiches Anordnen beziehungsweise Ausrichten der Befestigungseinrichtungen (beispielsweise durch Drehen des Winkelmessgerätes relativ zum Drehübertrager) bezogen auf die Ausnehmungen des Gehäuses ermöglicht, so dass Schrauben sowohl durch die Ausnehmungen als auch durch die Befestigungseinrichtungen steckbar sind zur Befestigung das Winkelmessgeräts zusammen mit dem Drehübertrager an einem ersten Maschinenteil. Somit sind durch die Schrauben gleichzeitig das Winkelmessgerät an dem ersten Maschinenteil und das Primärteil am Gehäuse des Winkelmessgeräts festlegbar. Weiterhin weist der Drehübertrager eine Tasche auf, in der eine Leiterplatte angeordnet ist, wobei die Tasche axial versetzt zur Primärwicklung radial außerhalb des Gehäuses angeordnet ist und das Gehäuse segmentartig teilweise umgibt. Demnach kann die Tasche geometrisch beschrieben als ein Hohlzylindersegment bezeichnet werden.

Im Folgenden ist unter axialer Richtung eine Richtung parallel zur Achse, um welche die relative Drehung zwischen der Welle und dem Gehäuse möglich ist, zu verstehen.

Mit Vorteil weist die Leiterplatte eine Oberfläche auf, die mit elektronischen Bauteilen bestückt ist, wobei die Leiterplatte so angeordnet ist, dass ein Normalenvektor dieser Oberfläche eine radiale Richtungskomponente aufweist. Gemäß den üblichen Definitionen in der Geometrie ist ein Normalenvektor ein Vektor, der orthogonal auf der betreffenden (möglicherweise auch gekrümmten) Oberfläche der Leiterplatte steht.

In weiterer Ausgestaltung der Erfindung weist die Leiterplatte eine Antenne auf zum Senden der elektrischen Signale vom Primärteil zum Sekundärteil.

Vorteilhafterweise ist die Leiterplatte aus mehreren starren Substraten aufgebaut, die durch zumindest ein flexibles Leiterstück (Flexleiter) miteinander verbunden sind. Die Leiterplatte kann als eine starrflexible Leiterplatte ausgestaltet sein, beispielsweise mit einer oder mehreren flexiblen Polyimid-Folien zwischen starren FR4-Substraten.

Gemäß einer weiteren Ausgestaltung der Erfindung weist der Drehübertrager ein Sekundärteil auf, das an einem zweiten Maschinenteil, welches relativ zum ersten Maschinenteil um die Achse drehbar ist, befestigt werden kann. Das Sekundärteil ist zudem (bezogen auf diese Achse) mit axialem Versatz relativ zum Primärteil angeordnet.

Mit Vorteil weist das Primärteil zur Übertragung elektrischer Leistung eine Primärwicklung auf. Zudem weist das Sekundärteil eine Sekundärwicklung auf, wobei sich in Richtung der Achse zwischen der Primärwicklung und der Sekundärwicklung ein Luftspalt befindet, so dass der Luftspalt eine Ausdehnung in axialer Richtung aufweist.

Vorteilhafterweise weist das Gehäuse einen ersten Außendurchmesser auf und das Primärteil einen zweiten Außendurchmesser, wobei der erste Außendurchmesser kleiner ist als der zweite Außendurchmesser.

Weiterhin kann die Primärwicklung radial außerhalb der Befestigungseinrichtungen beziehungsweise der Schrauben angeordnet sein.

Mit Vorteil weist das Gehäuse Vertiefungen auf und die Befestigungseinrichtungen (zum Beispiel Laschen, in denen Bohrungen eingearbeitet sind) sind auskragend ausgebildet, wobei die Befestigungseinrichtungen in den Vertiefungen aufgenommen sind. Insbesondere können sich die Vertiefungen in axialer Richtung erstrecken, das heißt, dass ein kleiner Bereich der Gehäusewandung im Bereich der Vertiefung axial versetzt zur Gehäusewandung angeordnet ist. Die Befestigungseinrichtungen können dann in axialer Richtung auskragend ausgebildet sein.

Das Gehäuse weist vorteilhafterweise eine runde Außenkontur auf und ist insbesondere in erster Näherung in zylindrischer Form ausgestaltet. Die Vertiefungen befinden sich dann an der Stirnseite des zylindrischen Gehäuses.

Vorteilhafterweise weist das Winkelmessgerät einen ersten Kabelanschluss auf und der Drehübertrager weist einen zweiten Kabelanschluss auf. Das Gehäuse und die Tasche sind dabei so ausgestaltet, dass der erste Kabelanschluss und der zweite Kabelanschluss bezogen auf die Achse in tangentialer Richtung orientiert sind.

Vorteilhafte Ausbildungen der Erfindung entnimmt man den abhängigen Ansprüchen.

Weitere Einzelheiten und Vorteile des erfindungsgemäßen Winkelmesssystems ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine perspektivische Ansicht eines Winkelmessgerätes,
- Figur 2: ein Schnitt durch ein Winkelmesssystem,
- Figur 3: eine perspektivische Explosions-Ansicht des Drehübertragers,
- Figur 4: eine perspektivische Detailansicht einer Befestigungseinrichtung des Drehübertragers,
- Figur 5: eine perspektivische Explosions-Ansicht des Winkelmesssystems,
- Figur 6: eine perspektivische Ansicht des Drehübertragers,
- Figur 7: eine perspektivische Ansicht des Winkelmesssystems.

### BESCHREIBUNG DER AUSFÜHRUNGSFORMEN

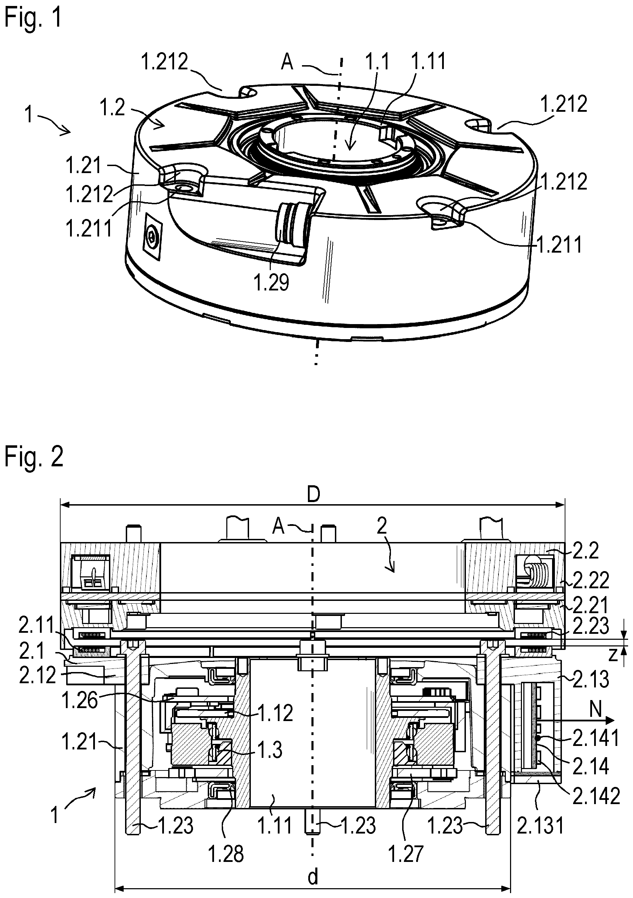

In der Figur 1 ist ein Winkelmessgerät 1 gezeigt wie es beispielsweise an einer Rundtischachse einer Werkzeugmaschine etwa einer Fräsmaschine eingebaut werden kann. Das Winkelmessgerät 1 umfasst eine erste Bauteilgruppe 1.1 und eine zweite Bauteilgruppe 1.2. Die erste Bauteilgruppe 1.1 ist gemäß der Figur 1 relativ zur zweiten Bauteilgruppe 1.2 um eine Drehachse A drehbar, so dass die erste Bauteilgruppe 1.1 dann als Rotor fungieren kann und die zweite Bauteilgruppe 1.2 auch als Stator bezeichnet werden kann. Die zweite Bauteilgruppe 1.2 umfasst ein Gehäuse 1.21 mit einer runden Außenwandung. Das Gehäuse 1.21 weist zudem Vertiefungen 1.212 beziehungsweise Einbuchtungen auf, welche sich in axialer Richtung erstrecken sowie mehrere Ausnehmungen 1.211, die im vorgestellten Ausführungsbeispiel als vier durchgängige Bohrungen ausgestaltet sind. Zur Versorgung des Winkelmessgeräts 1 mit elektrischer Energie und um die Signale abzuleiten, welche die gemessene Winkelinformation beinhalten, weist das Gehäuse 1.21 des Winkelmessgeräts 1 gemäß der Figur 1 einen Kabelanschluss 1.29 (im vorgestellten Ausführungsbeispiel einen Steckverbinder) auf, der bezogen auf die Achse A eine tangentiale Richtung aufweist, so dass also ein tangentialer erster Kabelabgang vorliegt.

In der Figur 2 ist ein Schnitt unter anderem durch das Winkelmessgerät 1 gezeigt. Demnach umfasst das Winkelmessgerät 1 ein Lager 1.3, im vorgestellten Ausführungsbeispiel ein Wälzlager. Die erste Bauteilgruppe 1.1 weist eine Welle 1.11 auf, die hier als eine Hohlwelle ausgestaltet ist und an der ein Skalenelement 1.12 drehfest fixiert ist. Die Welle 1.11 dient zur Aufnahme einer Maschinenwelle, die beispielsweise zu einem Rundtisch gehört, so dass dann die Maschinenwelle starr und drehfest mit der Welle 1.11 verbunden ist. Das Skalenelement 1.12 umfasst eine Teilung, wobei das Skalenelement 1.12 im vorgestellten Ausführungsbeispiel als eine Ringscheibe ausgebildet ist, an deren stirnseitiger Ringfläche die Teilung angeordnet ist.

Das Gehäuse 1.21 dient dazu den Innenraum des Winkelmessgeräts 1 vor Umwelteinflüssen zu schützen. In diesem Zusammenhang sind Dichtungen 1.28 (Figur 2) zwischen der Welle 1.11 und dem Gehäuse 1.21 vorgesehen. Im Inneren des Gehäuses 1.21 befindet sich gemäß der Figur 2 drehfest mit diesem verbunden ein Positionssensor 1.26, der dem Skalenelement 1.12 mit einem axialen Luftspalt gegenüber liegend angeordnet ist. Demnach gehören das Gehäuse 1.21 und der Positionssensor 1.26 zur zweiten Bauteilgruppe 1.2 des Winkelmessgerätes 1. Der Positionssensor 1.26 umfasst eine LED einen Kondensor und ein Sensorelement, das hier als ein so genannter Opto-ASIC auf einer Platine ausgestaltet ist. Die als Lichtquelle dienende LED sendet Licht durch den Kondensor auf das Skalenelement 1.12. Die LED, der Kondensor und das Sensorelement sind der zweiten Bauteilgruppe 1.2 des Winkelmessgeräts 1, also dem Stator zugeordnet. Das Sensorelement empfängt das vom drehbaren Skalenelement 1.12 modulierte Licht und wandelt dieses in elektrische Signale um, welche die Winkelinformation beinhalten.

Gemäß der Figur 2 weist das Gehäuse 1.21 einen ersten Außendurchmesser d auf. Durch die Ausnehmungen 1.211 des Gehäuses 1.21 können Schrauben 1.23 gesteckt werden. Auf diese Weise kann das Winkelmessgerät 1 für den Messbetrieb an einem ersten Maschinenteil, das insbesondere entsprechende Bohrungen mit Innengewinden aufweist, mit Hilfe der Schrauben 1.23 starr fixiert werden.

Die zweite Bauteilgruppe 1.2 umfasst ferner eine Ausgleichskupplung 1.27. Diese dient dazu Verschiebungen bedingt durch naturgemäße Fertigungs- und Montageungenauigkeiten auszugleichen.

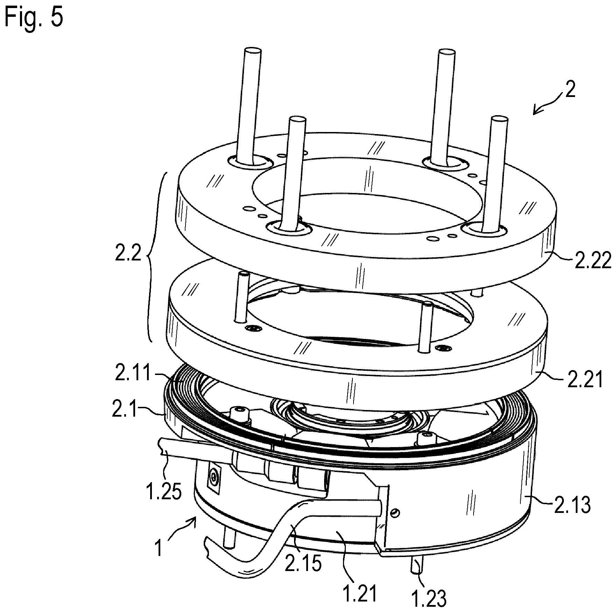

Weiterhin umfasst das Winkelmesssystem einen Drehübertrager 2 gemäß den Figuren 2 bis 7. Der Drehübertrager 2 umfasst ein Primärteil 2.1 und ein Sekundärteil 2.2. Das Primärteil 2.1 und das Sekundärteil 2.2 haben jeweils eine runde insbesondere ringförmige Form und weisen einen zweiten Außendurchmesser D auf. Der Drehübertrager 2 dient hier zur kontaktlosen beziehungsweise drahtlosen Übertragung sowohl von elektrischen Signalen als auch von elektrischer Leistung.

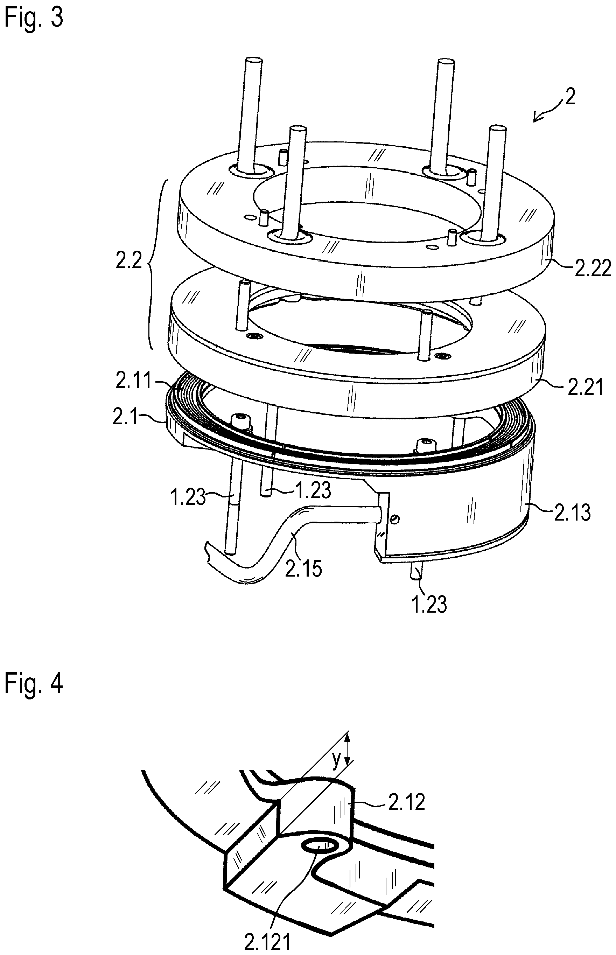

Zur Übertragung der elektrischen Leistung umfasst das Primärteil 2.1 eine Primärwicklung 2.11 (siehe die Figuren 2 und 3), die ringförmig verläuft, wobei der Innendurchmesser der Primärwicklung 2.11 größer ist als der Außendurchmesser d des Gehäuses 1.21. Das Primärteil 2.1 weist Befestigungseinrichtungen 2.12 (siehe die Figuren 2, 3, 4 und 6) auf, die im vorgestellten Ausführungsbeispiel als radial nach innen gerichtete Laschen ausgestaltet sind, in denen Bohrungen 2.121 eingebracht sind. Die Befestigungseinrichtungen 2.12 sind in axialer Richtung auskragend ausgestaltet. Im vorgestellten Ausführungsbeispiel kragen die Befestigungseinrichtungen 2.12 gemäß der Figur 4 mit einer Höhe y in axialer Richtung aus.

Die Primärwicklung 2.11 ist radial außerhalb der Befestigungseinrichtungen 2.11, hier radial außerhalb der nach innen ragenden Laschen, angeordnet. Diese Befestigungseinrichtungen 2.12 sind nach einem Muster angeordnet, das dem Bild der Ausnehmungen 1.211 des Gehäuses 1.21 entspricht, so dass die Befestigungseinrichtungen 2.12 durch entsprechendes Drehen des Primärteils 2.1 um die Achse A in eine deckungsgleiche Anordnung mit den Ausnehmungen 1.211 des Gehäuses 1.21 gebracht werden können. In die Vertiefungen 1.212 beziehungsweise Einbuchtungen des Gehäuses 1.21 rasten die Befestigungseinrichtungen 2.12 (Laschen) unter einer Relativbewegung in axialer Richtung passgenau ein. In dieser Stellung kann durch die Schrauben 1.23 sowohl das Winkelmessgerät 1 an dem ersten Maschinenteil als auch das Primärteil 2.1 am Gehäuse 1.21 festgelegt werden. Die Primärwicklung 2.11 ist dann radial außerhalb der Schrauben 1.23 angeordnet. Der erste Außendurchmesser d des Gehäuses 1.21 ist gemäß der Figur 2 kleiner als der zweite Außendurchmesser D des Primärteils 2.1. Insbesondere ist das Winkelmesssystem so konfiguriert, dass der erste Außendurchmesser d des Gehäuses 1.21 kleiner ist als der Innendurchmesser der Primärwicklung 2.11.

Weiterhin weist das Primärteil 2.1 eine Tasche 2.13 auf, die axial versetzt zur Primärwicklung 2.11 angeordnet ist. Im vorgestellten Ausführungsbeispiel ist die Tasche 2.13 als ein Hohlzylindersegment ausgestaltet, das sich um etwa 60° entlang der Umfangsrichtung, radial außerhalb des Gehäuses 1.21 erstreckt. Somit umgibt die Tasche 2.13 segmentartig das Gehäuse 1.21 teilweise, also in einem Teilumfang.

Gemäß der Figur 2 weist die Tasche 2.13 einen inneren Hohlraum auf, in dem eine Leiterplatte 2.14 angeordnet ist. Im vorgestellten Ausführungsbeispiel ist die Leiterplatte 2.14 als starrflexible Leiterplatte ausgeführt und ist aus zwei starren Substraten aufgebaut, die durch einen Flexleiter als ein flexibles Leiterstück miteinander verbunden sind. Durch diese Bauweise kann die Leiterplatte 2.14 der Krümmung des inneren Hohlraums folgend in diesen eingelegt werden. Alternativ dazu könnte auch ein durchgängig flexibles Leiterplattensubstrat verwendet werden. Naturgemäß weist die Leiterplatte 2.14 eine Oberfläche 2.141 auf, die mit elektronischen Bauteilen 2.142 bestückt ist. Die elektronischen Bauteile 2.142 gehören zu einer Schaltung, durch die der zu übertragende Strom geformt und für die Übertragung durch die Primärwicklung 2.11 bereitgestellt wird. Zudem befindet sich auf der Leiterplatte 2.14 eine elektronische Schaltung, durch die Signale aufbereitet werden, die von einer auf der Leiterplatte 2.14 befindlichen Antenne gesendet werden können.

Die Leiterplatte 2.14 ist sozusagen stehend in der Tasche 2.13 angeordnet, so dass diese um die Achse A gekrümmt ausgebildet ist beziehungsweise ein Normalenvektor N der Oberfläche 2.141 bezogen auf die Achse A eine radiale Richtungskomponente aufweist. Nach erfolgter Montage der Leiterplatte 2.14 wird der Innenraum der Tasche 2.13 durch einen Deckel 2.131 verschlossen um die Leiterplatte 2.14 vor Umgebungseinflüssen zu schützen.

Das Primärteil 2.1 weist ein zweites Kabel 2.15 auf, durch welches eine elektrische Verbindung mit einer Strom- und einer Signalquelle hergestellt werden kann. Die Tasche 2.13 des Primärteils 2.1 ist so ausgestaltet, dass diese bezogen auf die Achse A für das zweite Kabel 2.15 einen Kabelabgang in tangentialer Richtung aufweist.

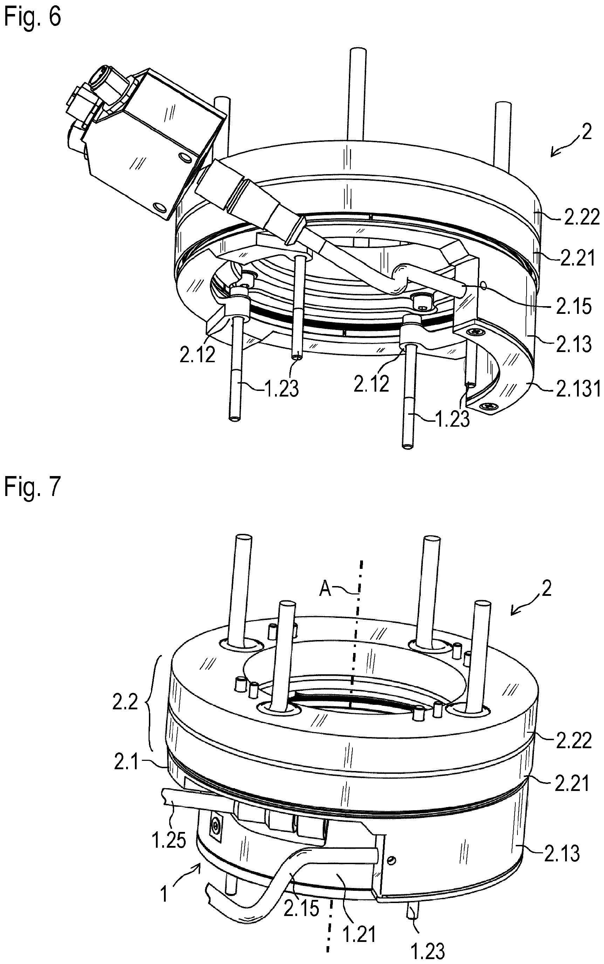

Mit axialem Versatz dem Primärteil 2.1 gegenüber liegend ist ein Sekundärteil 2.2 des Drehübertragers 2 angeordnet, das an einem zweiten Maschinenteil, welches relativ zum ersten Maschinenteil um die Achse A drehbar gelagert ist, befestigt werden kann. Das Sekundärteil 2.2 umfasst ein erstes Gehäuseteil 2.21 und ein zweites Gehäuseteil 2.22, wobei das erste Gehäuseteil 2.21 axial versetzt zum zweiten Gehäuseteil 2.22 angeordnet ist. Im ersten Gehäuseteil 2.21 befindet sich eine Sekundärwicklung 2.23 (Figur 2), die mit einer elektronischen Schaltung, die im zweiten Gehäuseteil 2.22 untergebracht ist, verbunden ist. Die Sekundärwicklung 2.23 ist relativ zur Primärwicklung 2.11 des Primärteils 2.1 so angeordnet, dass gemäß der Figur 2 zwischen der Primärwicklung 2.11 und der Sekundärwicklung 2.23 in Richtung der Achse A ein Luftspalt z vorliegt. Im Betrieb des Winkelmesssystems, wie es in der Figur 7 gezeigt ist, wird elektrische Leistung von der stationären Primärwicklung 2.11 des Primärteils 2.1 auf die rotierende Sekundärwicklung 2.23 des Sekundärteils 2.2 übertragen.

Vom Sekundärteil 2.2 können dann die elektrische Leistung und die Signale an weitere Einrichtungen, die sich mit dem Sekundärteil 2.2 mitdrehen weitergeleitet werden.

## Patentansprüche

1. Winkelmesssystem umfassend ein Winkelmessgerät (1) und einen Drehübertrager (2) zur kontaktlosen Übertragung von elektrischen Signalen und / oder elektrischer Leistung, wobei
- das Winkelmessgerät (1) eine Welle (1.11) und ein Gehäuse (1.21) umfasst, und
- die Welle (1.11) relativ zum Gehäuse (1.21) um eine Achse (A) drehbar angeordnet ist, wobei
- das Gehäuse (1.21) die Welle (1.11) umschließt und Ausnehmungen (1.211) aufweist,
- der Drehübertrager (2) ein Primärteil (2.1) aufweist, wobei das Primärteil (2.1)
- eine Primärwicklung (2.11) aufweist, sowie
- Befestigungseinrichtungen (2.12) aufweist, die nach einem Muster angeordnet sind, so dass die Befestigungseinrichtungen (2.12) bezogen auf die Ausnehmungen (1.211) des Gehäuses (1.21) deckungsgleich angeordnet sind und Schrauben (1.23) sowohl durch die Ausnehmungen (1.211) als auch durch die Befestigungseinrichtungen (2.12) steckbar sind zur Befestigung des Winkelmessgeräts (1) zusammen mit dem Drehübertrager (2) an einem ersten Maschinenteil und
- eine Tasche (2.13) aufweist, in der eine Leiterplatte (2.14) angeordnet ist, wobei die Tasche (2.13) axial versetzt zur Primärwicklung (2.11) radial außerhalb des Gehäuses (1.21) angeordnet ist und das Gehäuse (1.21) segmentartig teilweise umgibt.

2. Winkelmesssystem gemäß dem Anspruch 1, wobei die Leiterplatte (2.14) eine Oberfläche (2.141) aufweist, die mit elektronischen Bauteilen (2.142) bestückt ist, wobei die Leiterplatte (2.14) so angeordnet ist, dass ein Normalenvektor (N) der Oberfläche (2.141) eine radiale Richtungskomponente aufweist.

3. Winkelmesssystem gemäß einem der vorhergehenden Ansprüche, wobei die Leiterplatte (2.14) eine Antenne aufweist, zum Senden elektrischer Signale vom Primärteil (2.1) zum Sekundärteil (2.2).

4. Winkelmesssystem gemäß einem der vorhergehenden Ansprüche, wobei die Leiterplatte (2.14) aus mehreren starren Substraten aufgebaut ist, die durch zumindest ein flexibles Leiterstück miteinander verbunden sind.

5. Winkelmesssystem gemäß einem der vorhergehenden Ansprüche, wobei der Drehübertrager (2) ein Sekundärteil (2.2) aufweist, das an einem zweiten Maschinenteil, welches relativ zum ersten Maschinenteil um die Achse (A) drehbar ist, befestigbar ist und bezogen auf die Achse (A) mit axialem Versatz relativ zum Primärteil (2.1) angeordnet ist.

6. Winkelmesssystem gemäß dem Anspruch 5, wobei das Sekundärteil (2.2) eine Sekundärwicklung (2.23) aufweist, wobei sich in Richtung der Achse (A) zwischen der Primärwicklung (2.11) und der Sekundärwicklung (2.23) ein Luftspalt (z) befindet.

7. Winkelmesssystem gemäß einem der vorhergehenden Ansprüche, wobei die Primärwicklung (2.11) radial außerhalb der Befestigungseinrichtungen (2.12) angeordnet ist.

8. Winkelmesssystem gemäß einem der vorhergehenden Ansprüche, wobei das Gehäuse (1.21) Vertiefungen (1.212) aufweist und die Befestigungseinrichtungen (2.12) auskragend ausgebildet sind, wobei die Befestigungseinrichtungen (2.12) in den Vertiefungen (1.212) aufgenommen sind.

9. Winkelmesssystem gemäß dem Anspruch 8, wobei sich die Vertiefungen (1.212) in axialer Richtung erstrecken und die Befestigungseinrichtungen (2.12) in axialer Richtung auskragend ausgebildet sind.

10. Winkelmesssystem gemäß einem der vorhergehenden Ansprüche, wobei das Winkelmessgerät (1) einen ersten Kabelanschluss (1.22) aufweist und der Drehübertrager (2) einen zweiten Kabelanschluss (2.15) aufweist, wobei das Gehäuse (1.21) und die Tasche (2.13) so ausgestaltet sind, dass der erste Kabelanschluss (1.22) und der zweite Kabelanschluss (2.15) bezogen auf die Achse (A) in tangentialer Richtung orientiert sind.

## Claims

1. Angle measuring system comprising an angle measuring device (1) and a rotary transmitter (2) for contactless transmission of electrical signals and/or electrical power, wherein
- the angle measuring device (1) comprises a shaft (1.11) and a housing (1.21), and
- the shaft (1.11) is arranged rotatably about an axis (A) relative to the housing (1.21), wherein
- the housing (1.21) surrounds the shaft (1.11) and has recesses (1.211),
- the rotary transmitter (2) has a primary part (2.1), wherein the primary part (2.1)
- has a primary winding (2.11), and
- has fastening devices (2.12) which are arranged according to a pattern such that the fastening devices (2.12) are arranged congruently with respect to the recesses (1.211) of the housing (1.21), and screws (1.23) are insertable both through the recesses (1.211) and through the fastening devices (2.12) for fastening the angle measuring device (1) together with the rotary transmitter (2) to a first machine part, and
- has a pocket (2.13) in which a printed circuit board (2.14) is arranged, wherein the pocket (2.13) is arranged offset axially with respect to the primary winding (2.11) radially outside the housing (1.21) and partially surrounds the housing (1.21) in a segment-like manner.

2. Angle measuring system according to Claim 1, wherein the printed circuit board (2.14) has a surface (2.141) which is populated with electronic components (2.142), wherein the printed circuit board (2.14) is arranged in such a manner that a normal vector (N) of the surface (2.141) has a radial direction component.

3. Angle measuring system according to either of the preceding claims, wherein the printed circuit board (2.14) has an antenna, for sending electrical signals from the primary part (2.1) to the secondary part (2.2).

4. Angle measuring system according to one of the preceding claims, wherein the printed circuit board (2.14) is constructed from a plurality of rigid substrates which are connected to one another by at least one flexible conductor piece.

5. Angle measuring system according to one of the preceding claims, wherein the rotary transmitter (2) has a secondary part (2.2) which is fastenable to a second machine part, which is rotatable about the axis (A) relative to the first machine part, and which secondary part is arranged with an axial offset with respect to the axis (A) relative to the primary part (2.1).

6. Angle measuring system according to Claim 5, wherein the secondary part (2.2) has a secondary winding (2.23), wherein there is an air gap (z) between the primary winding (2.11) and the secondary winding (2.23) in the direction of the axis (A).

7. Angle measuring system according to one of the preceding claims, wherein the primary winding (2.11) is arranged radially outside the fastening devices (2.12).

8. Angle measuring system according to one of the preceding claims, wherein the housing (1.21) has depressions (1.212) and the fastening devices (2.12) are formed in a projecting manner, wherein the fastening devices (2.12) are received in the depressions (1.212).

9. Angle measuring system according to Claim 8, wherein the depressions (1.212) extend in the axial direction, and the fastening devices (2.12) are formed in a projecting manner in the axial direction.

10. Angle measuring system according to one of the preceding claims, wherein the angle measuring device (1) has a first cable connection (1.22) and the rotary transmitter (2) has a second cable connection (2.15), wherein the housing (1.21) and the pocket (2.13) are configured in such a manner that the first cable connection (1.22) and the second cable connection (2.15) are oriented in the tangential direction with respect to the axis (A).

## Revendications

1. Système de mesure d'angle, comprenant un appareil de mesure d'angle (1) et un transmetteur rotatif (2) pour la transmission sans contact de signaux électriques et/ou d'une puissance électrique, dans lequel
- l'appareil de mesure d'angle (1) comprend un arbre (1.11) et un boîtier (1.21), et
- l'arbre (1.11) est disposé par rapport au boîtier (1.21) de manière à pouvoir tourner autour d'un axe (A), dans lequel
- le boîtier (1.21) entoure l'arbre (1.11) et présente des évidements (1.211),
- le transmetteur rotatif (2) présente une partie primaire (2.1), la partie primaire (2.1) présentant
- un enroulement primaire (2.11), ainsi que
- des dispositifs de fixation (2.12) qui sont disposés selon un modèle de sorte que les dispositifs de fixation (2.12) sont disposés de manière coïncidente par rapport aux évidements (1.211) du boîtier (1.21), et des vis (1.23) peuvent être insérées à la fois à travers les évidements (1.211) et à travers les dispositifs de fixation (2.12) pour fixer l'appareil de mesure d'angle (1) conjointement avec le transmetteur rotatif (2) à une première partie de machine, et
- une poche (2.13) dans laquelle une carte de circuits imprimés (2.14) est disposée, la poche (2.13) étant disposée de manière axialement décalée par rapport à l'enroulement primaire (2.11), radialement à l'extérieur du boîtier (1.21), et entoure le boîtier (1.21) en partie en forme de segments.

2. Système de mesure d'angle selon la revendication 1, dans lequel la carte de circuits imprimés (2.14) présente une surface (2.141) qui est équipée de composants électroniques (2.142), dans lequel la carte de circuits imprimés (2.14) est disposée de telle sorte qu'un vecteur normal (N) de la surface (2.141) présente une composante directionnelle radiale.

3. Système de mesure d'angle selon l'une quelconque des revendications précédentes, dans lequel la carte de circuits imprimés (2.14) présente une antenne pour émettre des signaux électriques de la partie primaire (2.1) à la partie secondaire (2.2).

4. Système de mesure d'angle selon l'une quelconque des revendications précédentes, dans lequel la carte de circuits imprimés (2.14) est composée de plusieurs substrats rigides qui sont reliés ensemble par au moins une pièce conductrice flexible.

5. Système de mesure d'angle selon l'une quelconque des revendications précédentes, dans lequel le transmetteur rotatif (2) présente une partie secondaire (2.2) qui peut être fixée à une deuxième partie de machine qui peut tourner par rapport à la première partie de machine autour de l'axe (A), et qui est disposée par rapport à l'axe (A) avec un décalage axial par rapport à la partie primaire (2.1).

6. Système de mesure d'angle selon la revendication 5, dans lequel la partie secondaire (2.2) présente un enroulement secondaire (2.23), dans lequel un entrefer (z) se trouve en direction de l'axe (A) entre l'enroulement primaire (2.11) et l'enroulement secondaire (2.23).

7. Système de mesure d'angle selon l'une quelconque des revendications précédentes, dans lequel l'enroulement primaire (2.11) est disposé radialement à l'extérieur des dispositifs de fixation (2.12).

8. Système de mesure d'angle selon l'une quelconque des revendications précédentes, dans lequel le boîtier (1.21) présente des creux (1.212), et les dispositifs de fixation (2.12) sont réalisés en porte-à-faux, dans lequel les dispositifs de fixation (2.12) sont logés dans les creux (1.212).

9. Système de mesure d'angle selon la revendication 8, dans lequel les creux (1.212) s'étendent dans la direction axiale, et les dispositifs de fixation (2.12) sont réalisés en porte-à-faux dans la direction axiale.

10. Système de mesure d'angle selon l'une quelconque des revendications précédentes, dans lequel l'appareil de mesure d'angle (1) présente un premier raccord de câble (1.22) et le transmetteur rotatif (2) présente un deuxième raccord de câble (2.15), dans lequel le boîtier (1.21) et la poche (2.13) sont réalisés de telle sorte que le premier raccord de câble (1.22) et le deuxième raccord de câble (2.15) sont orientés dans une direction tangentielle par rapport à l'axe (A).
